Europäisches Patentamt

European Patent Office

Office européen des brevets

(11) Publication number: **0 370 207**
**A1**

## EUROPEAN PATENT APPLICATION

(21) Application number: 89118099.4

(51) Int. Cl.[5]: **B60L 9/30**

(22) Date of filing: 29.09.89

(30) Priority: 21.11.88 JP 293958/88

(43) Date of publication of application:
**30.05.90 Bulletin 90/22**

(84) Designated Contracting States:
**DE ES FR GB**

(71) Applicant: **MITSUBISHI DENKI KABUSHIKI
KAISHA**
**2-3, Marunouchi 2-chome Chiyoda-ku
Tokyo 100(JP)**

(72) Inventor: **Obi, Hideo Mitsubishi Denki K.K.
Itami Seisakusho, 1-1 Tsukaguchihonmachi
8-chome
Amagasaki-shi Hyogo-ken(JP)**
Inventor: **Kaneda, Junichiro Mitsubishi Denki
K.K.
Itami Seisakusho, 1-1 Tsukaguchihonmachi
8-chome
Amagasaki-shi Hyogo-ken(JP)**

(74) Representative: **Liesegang, Roland, Dr. et al
BOEHMERT & BOEHMERT
Widenmayerstrasse 4/I
D-8000 München 22(DE)**

(54) Electric motor vehicle.

(57) An electric motor vehicle which can travel in
running sections having different d.c. voltages, in-
cludes as its traction motor a polyphase induction
motor (29), the primary winding of which is divided
into plurality of sections (30a,30b), and inverters
(28a,28b) connected to the respective divided sections of the primary winding, the inputs of the inverters being adapted to be connected either in series
or in parallel, depending on the d.c. voltage of the
running section where the vehicle is travelling.

**FIGURE  I**

## ELECTRIC MOTOR VEHICLE

The present invention is related to an electric motor vehicle which can travel in running sections having different dc voltages.

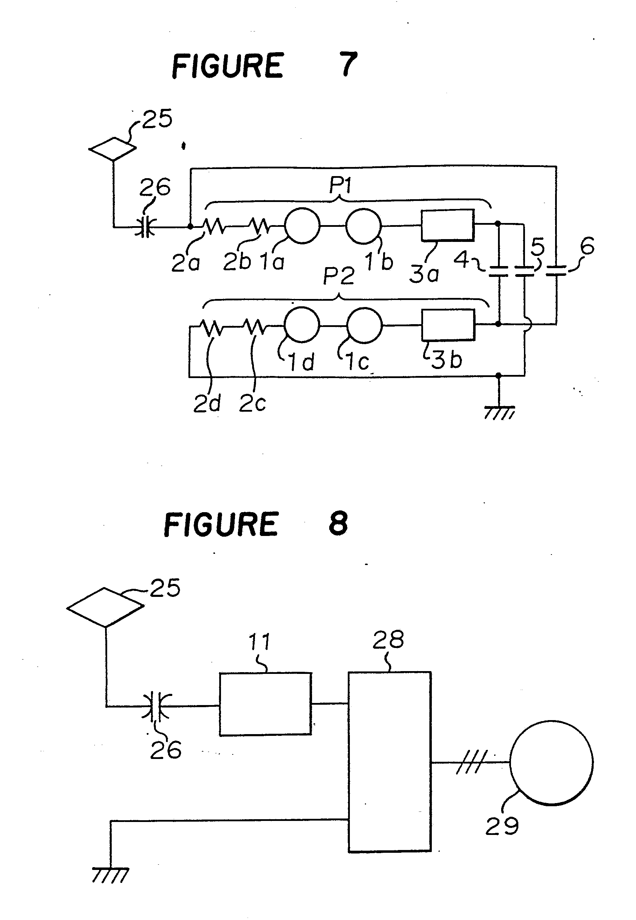

Such type of electric motor vehicle has been disclosed in e.g. "Denkisha-no-kagaku", October, 1980, pages 20-26. Figure 7 is a schematic diagram showing the circuit of the conventional electric motor vehicle which uses four dc series motors (hereinbelow, referred to as dc motors). A current collector 25 which is in contact with a trolly wire (not shown) with 600 volts dc or 1500 V dc fed is connected to one end of a series circuit of the field windings 2a and 2b of a pair of dc motors as traction motors, and to one end terminal of a first parallel switch 6 for switching the main circuit to parallel connection. The other end of the series circuit of the field windings 2a and 2b is connected to one end of a series circuit of the armature windings 1a and 1b of the pair of dc motors. The other end of the series circuit of the armature windings is connected to one end terminal of a resistor 3a for adjusting the armature current. The other end terminal of the resistor 3a is connected to one end terminal of a series switch 4 for switching the main circuit to series connection. The other end terminal of the series switch 4 is connected to the other end terminal of the first parallel switch 6. The junction of the resistor 3a and the series switch 4 is grounded through a second parallel switch 5.

The junction of the other end terminal of the series switch 4 and the other end terminal of the first parallel switch 6 is grounded through a series circuit of a resistor 3b and the armature windings 1c and 1d of another pair of dc motors, and a series circuit of their field windings 2c and 2d.

Now, the operation of the electric motor vehicle will be explained. Firstly, a main circuit breaker 26 is closed. When the electric motor vehicle is in the running section having 1500 volts dc, the series switch 4 is closed to introduce the main circuit section P1 comprising the pair of dc motors in series with the main circuit section P2 comprising the other pair of dc motors. When the electric motor vehicle is in the section having 600 volts dc, only the first and second parallel switches 5 and 6 are closed to introduce the main circuit section P1 in parallel with the main circuit section P2. Switching the series switch 4 and switching the parallel switches 5 and 6 are made in this way so that an adequate dc voltage is fed to the dc motors in either of the running sections.

Such dc motors can be replaced by shunt motors as induction motors. In this case, when power having variable voltage and variable frequency is fed from an inverters to their associated shut motors, it is impossible to individually control the currents in the field windings of the shunt motors connected in series because the shunt motors have their field windings and armature windings connected in parallel. As a result, the terminal voltages of the armature windings become unbalanced. In order to eliminate such problem, a chopper for adjusting a dc voltage is provided at the input side of each inverter to adjust the input voltage of each inverter under such inverter control system. Figure 8 is a schematic block diagram showing the electric motor vehicle wherein such choppers and inverters are used.

Referring to Figure 8, the current collector 25 is connected to the input of a chopper 11 through the main circuit breaker 26. The chopper 11 is set to output a predetermined dc voltage (e.g. 500 volt). The chopper 11 has its output connected to one of the inputs of an inverter 28 which can invert the dc voltage into an ac voltage. The inverter has its other input grounded. The inverter 11 has its output connected to a three phase induction motor 29. The inverter 28 can be constituted using a semiconductor such as gate turn off thyrister.

When the three phase induction motor is used in the conventional electric motor vehicle which can travel in running sections having different voltages, both chopper and inverter are required. As a result, great spaces for mounting them are needed, and there is created a problem wherein the cost of the electric motor vehicle rises.

It is an object of the present invention to eliminate such problems, and to provide an inexpensive electric motor vehicle which allows a polyphase induction motor to be utilized without using a chopper, and which can therefore save the great space for mounting the chopper.

The foregoing and the other objects of the present invention have been attained by providing an electric motor vehicle which can travel in running sections having different dc voltages; including as its traction motor a polyphase induction motor, the primary winding of which is divided into plurality of sections; and inverters connected to the respective sections of the primarily winding, the input side of the inverters being adapted to be connected either in series or parallel depending on the dc voltage of the running section where the vehicle is travelling. As a result, no chopper is needed. When the plural polyphase induction motors are utilized, they can be driven with the voltages of their primary windings balanced, thereby to be able to cope with the change in dc voltage. In accordance with the present invention, a great space required to mount a chopper is not needed, eliminating the mounting cost of it. The cost of the electric motor vehicle can be lowered accordingly.

In drawings:

Figure 1 is a schematic block diagram showing a first embodiment of the electric motor vehicle according to the present invention;

Figures 2 and 3 are schematic block diagrams showing how inverter units are switched;

Figures 4 and 5 are schematic diagrams showing how the primary winding of an induction motor can be devided;

Figure 6 is a schematic block diagram showing how inverter units are switched in a second embodiment of the present invention; and

Figures 7 and 8 are schematic block diagrams showing the conventional electric motor vehicles.

Now, the present invention will be described in detail with reference to preferred embodiments illustrated in the accompanying drawings:

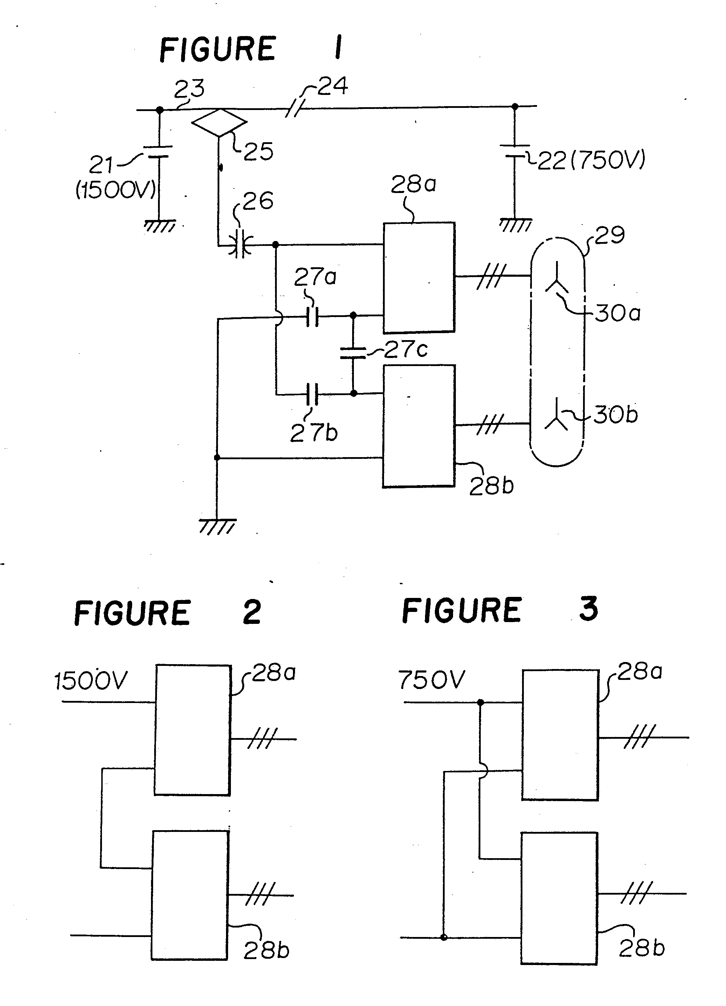

Referring to Figure 1 which is the schematic block diagram showing a first embodiment of the electric motor vehicle according to the present invention, a trolly wire 23 is powered by a dc power source 21 of e.g. 1500 volts at one side of a sectional point 24, and by a dc power source 22 of e.g. 750 volts at the other side.

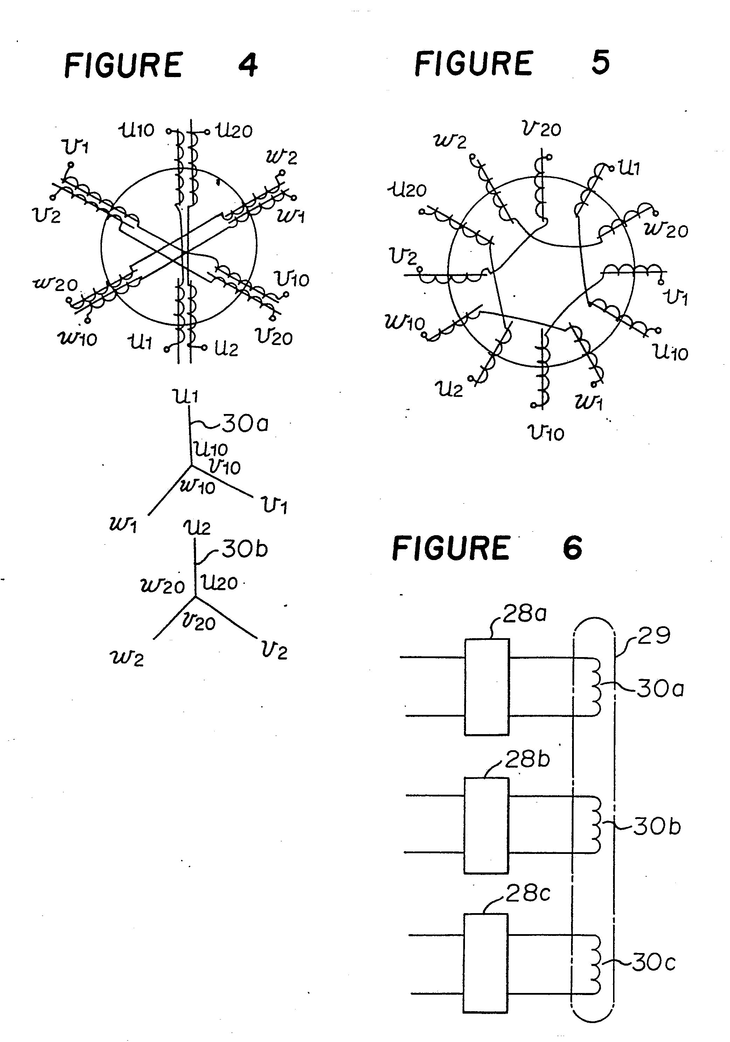

A current collector 25 which is in touch with the trolly wire 23 is connected through a main circuit breaker 26 to one of the input terminals of a first inverter unit 28a which can convert a dc current into an ac current. The one input terminal of the first inverter unit is connected to one of the input terminals of a second inverter unit 28b through a main circuit changeover switch 27b. The other input terminal of the first inverter unit 28a is grounded through a main circuit changeover switch 27a. Between the other input terminal of the first inverter unit 28a and the one input terminal of the second inverter unit 28b is interposed a main circuit changeover switch 27c. The other input terminal of the second inverter unit 28b is grounded. The output side of the first inverter unit 28a is connected to one part 30a of the two-sectioned primary windings which are wound at the same number of turn at the respective phases in a three phase induction motor 29. In this case, the primary winding is sectioned in two parts as shown in Figure 4. The output side of the second inverter unit 28b is connected to the other part 30b of the two-sectioned primary windings. The sectioned primary windings 30a and 30b are insulated from each other. Both windings are wound so that the flux of the rotating field produced by one of them cumulatively affects that produced by the other. When the three phase induction motor 29 has four holes, two primary windings corresponding to two of the four holes can be used to connect to the respective inverter units, instead of the two sectioned primary windins 30a and 30b as shown in Figure 5.

The operation of the electric motor vehicle which is constructed as described above will be explained with reference to Figures 1, 2 and 3. Figures 2 and 3 are schematic block diagram showing how the inverter units are switched to cope with the changes in applied dc voltages.

The main circuit breaker 26 is closed to run the electric motor vehicle. When the electric motor vehicle is travelling in the running section having the trolly wire voltage of 1500 volts as shown in Figure 1, only the main circuit switch 27c is closed. As a result, the two inverter units 28a and 28b are connected in series with each other as shown in Figure 2, and the input voltage to each inverter unit 28a or 28b becomes 750 volts which is obtained by dividing 1500 volts into two parts. The output voltage which is generated by each inverter unit based on such input voltage is applied to each sectioned primary winding 30a or 30b of the three phase induction motor 29 to drive the motor 29.

On the other hand, when the electric motor vehicle is travelling in the running section having the trolly wire voltage of 750 volts, both main circuit switches 27a and 27b are closed. As a result, the two inverter units 28a and 28b are connected in parallel with each other as shown in Figure 3, and the input voltage to each inverter unit 28a or 28b becomes 750 volts. The output voltage which is generated by each inverter unit based on such input voltage is applied to each sectioned primary winding 30a or 30b of the three phase induction motor 29 to drive the motor.

In this way, the input voltage to each inverter unit 28a or 28b is equalized, and the terminal voltage of each sectioned primary winding 30a or 30b is balanced, allowing the three phase induction mortor 29 to be driven without using a chopper. In addition, a semiconductor switch for 750 volts service can be utilized in each inverter unit 28a or 28b.

The rotating magnetic fields which are generated by the currents flowing through the sectioned primary windings 30a and 30b cumulatively affect each other to drive the induction motor 29.

In the first embodiment, the primary winding of the three phase induction motor comprises the two sectioned primary windings 30a and 30b, each of which has star connection. Each of the sectioned primary windings can help delta connection.

The primary winding of the three phase induction motor can have open type delta connection as shown in Figure 4. In this case, each single phase inverter unit 28a, 28b or 28c are connected to the primary winding 30a, 30b and 30c of each phase, and the inputs of the three inverter units 28a, 28b and 28c are connected either in series or in parallel depending on the dc voltage which is fed in the running section.

Although explanation on the embodiments has been made with reference to cases wherein the trolly wire voltage is 1500 volts dc and 750 volts dc, the present invention is also applicable to cases wherein the electric motor vehicle is travelling in running section having 3000 volts dc, 1000 volts dc, 600 volts dc and the like.

Although in the embodiments a single of the three phase induction motor is utilized, a similar circuit can be used to drive the plural three phase induction motors under parallel connection. The number of the phase of the induction motor is not limited to three phase.

## Claims

1. An electric motor vehicle which can travel in running sections having different d.c. voltages, **characterized** in that its traction motor (29) is a polyphase induction motor, the primary winding of which is divided into plurality of sections (30a, 30b;30a,30b,30c);
and in that inverters (28a,28b;28a,28b,28c) are connected to the respective divided sections of the primary winding, the inputs of the inverters being adapted to be connected either in series or in parallel, depending on the d.c. voltage of the running section where the vehicle is travelling.

2. A vehicle according to claim 1, **characterized** in that the primary winding of the induction motor (29) is divided in two sectioned parts (30a,30b).

3. A vehicle according to claim 2, **characterized** in that each of the two sectioned parts (30a,30b) has star connection.

4. A vehicle according to claim 2, **characterized** in that each of the two sectioned parts (30a,30b) has delta connection.

5. An electric motor vehicle according to claim 1, **characterized** in that the primary winding of the induction motor (29) has open type delta connection, and in that each single phase inverter (28a,28b,28c) is connected to the primary winding of each phase.

FIGURE 1

FIGURE 2

FIGURE 3

# FIGURE 4

# FIGURE 5

# FIGURE 6

## FIGURE 7

P1

P2

25

26

2a 2b 1a 1b 3a 4 5 6

2d 2c 1d 1c 3b

## FIGURE 8

25

11 28

26 29

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | FR-A-2292606 (FRIED. KRUPP GMBH) <br> * the whole document * <br> --- | 1 | B60L9/30 |
| A | DE-A-2743699 (MITSUBISHI DENKI K.K.) <br> * claim 1; figures 1a, 1b * <br> --- | 1-3 | |
| P,X | EP-A-320560 (ACEC) <br> * page 3, lines 46 - 53; figures 1, 4 * <br> ----- | 1-3 | |
| | | | TECHNICAL FIELDS SEARCHED (Int. Cl.5 ) |
| | | | B60L <br> H02P |

The present search report has been drawn up for all claims

| Place of search | Date of completion of the search | Examiner |
|---|---|---|
| THE HAGUE | 16 FEBRUARY 1990 | BEYER F. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document